# EUROPÄISCHE PATENTSCHRIFT

(11) **EP 4 049 821 B1**
(45) Veröffentlichungstag und Bekanntmachung des Hinweises auf die Patenterteilung: **06.09.2023**
(21) Anmeldenummer: 22152953.0
(22) Anmeldetag: 24.01.2022
(51) Int. Cl.: B29C 45/14

(54) **VERBUNDBAUTEIL UND VERFAHREN ZUR HERSTELLUNG EINES VERBUNDBAUTEILS**
COMPOSITE COMPONENT AND METHOD FOR MANUFACTURING SAME
PIÈCE COMPOSITE ET PROCÉDÉ DE FABRICATION D'UNE PIÈCE COMPOSITE

(30) Priorität: 15.02.2021 DE 102021103497
(43) Veröffentlichungstag der Anmeldung: 31.08.2022
(73) Patentinhaber: Universität Kassel, 34125 Kassel (DE)
(72) Erfinder: JAKOB, Fabian, 34302 Guxhagen (DE); HEIM, Hans-Peter, 33332 Gütersloh (DE)
(74) Vertreter: Walther Bayer Faber Patentanwälte PartGmbB

(56) Entgegenhaltungen:
- EP-A2- 0 730 947
- WO-A1-2007/000174
- DE-A1-102012 219 442
- DE-C1- 10 124 122
- JP-A- 2011 079 289
- US-A1- 2014 186 609

## Beschreibung

Die vorliegende Erfindung betrifft ein Verbundbauteil umfassend eine Strukturkomponente aus einem thermoplastischen Werkstoff oder einem Thermoplast-basierten Verbundwerkstoff und wenigstens eine Spritzgusskomponente aus einem Kunststoff, wobei die Strukturkomponente in einem Hinterspritzabschnitt mit der Spritzgusskomponente hinterspritzt ist. Weiterhin betrifft die Erfindung ein Verfahren zur Herstellung eines solchen Verbundbauteils.

### STAND DER TECHNIK

Verbundbauteile der eingangs genannten Art entstammen dem Technologiefeld des Hybridleichtbaus und finden beispielsweise beim Automobilbau Verwendung, wo sie insbesondere als Türmodule oder Frontends eingesetzt werden. Derartige Verbundbauteile sind gekennzeichnet durch eine typischerweise flächige Strukturkomponente und abschnittsweise hinterspritzte Funktionselemente in Form von Spritzgusskomponenten, welche beispielsweise als Anschraubpunkte oder zusätzliche Versteifungselemente fungieren. Die Strukturkomponente ist dabei beispielsweise aus einem Organoblech gebildet, d.h. aus einem Faser-Matrix-Halbzeug mit einem in einer thermoplastischen Kunststoffmatrix eingebetteten Fasergewebe oder Fasergelege, bspw. aus Glasfasern, Kohlefasern, Thermoplast-basierten Fasern, Naturfasern, Celluloseregeneratfasern, etc. Herstellungsseitig werden Faserverbundwerkstoffe zunehmend in kombinierten Kompaktier- und Spritzgussverfahren verarbeitet, weil dadurch mit einem hochfesten Werkstoff Bauteile unterschiedlichster Geometrien fertigbar sind, was eine Substitution von Metallbauteilen ermöglicht und somit ein Leichtbaupotenzial schafft.

Beispielsweise offenbart die Druckschrift DE 101 24 122 C1 ein Verfahren zum Herstellen eines faserverstärkten Kunststoffteils, umfassend die Schritte:
- Anordnen einer Verbundplatte, die aus Fasermatten und Lagen aus thermoplastischen Kunststoff ausgebildet ist, in einer Spritzgießform, wobei die Verbundplatte über die Erweichungstemperatur des thermoplastischen Kunststoffes erwärmt ist,
- Füllen der Spritzgießform mit über die Erweichungstemperatur erwärmten thermoplastischen Kunststoff,
- Verringern des Volumens der Spritzgießform zum Verdichten des eingefüllten thermoplastischen Kunststoffes, so dass der eingefüllte thermoplastische Kunststoff zu einer Konturkulisse geprägt wird und sich mit der Verbundplatte verbindet, und
- Entformen des Kunststoffteils.

Weiterhin offenbart die Druckschrift WO 2007/000174 A1 ein Verfahren zur Herstellung eines Bauteils mit einer Träger-Schicht und einer Dekorations-Schicht mit einem daran angeordneten zusätzlichen Formteil aus Kunststoff mit den folgenden Schritten:
- Einlegen einer plastifizierten Matte mit Faseranteilen als Ausgangsmaterial der Trägerschicht sowie ein Zuschnitt als Ausgangsmaterial für die Dekorations-Schicht in ein Pressverform-Werkzeug mit einer ersten Werkzeug-Hälfte mit einer konturgebenden Anlagefläche zur Anlage des Ausgangsmaterials für die Träger-Schicht und einer zweiten Werkzeug-Hälfte mit einer konturgebenden Anlagefläche zur Anlage des Ausgangsmaterials für die Dekorations-Schicht, wobei die erste Werkzeug-Hälfte zumindest eine Kavität und einen darin über eine Verstelleinrichtung verschiebbaren Schieber sowie einen Zuführungs-Kanal, der mit einem Mittel zur Einführung von Kunststoff in Verbindung steht, aufweist und sich der Schieber in einer zurückgefahrenen Stellung befindet,
- Zusammenpressen der Werkzeug-Hälften, um die Ausgangsmaterialien miteinander zu verbinden, und währenddessen oder anschließend Einlassen einer vorbestimmten Menge des Kunststoffs im plastischen Zustand durch einen Zuführungskanal in die Kavität, wobei das Volumen des in die Kavität eingeführten Kunststoffs kleiner ist als das Volumen der Kavität,
- Bewegen des Schiebers in seine Endstellung, in der der Kunststoff den von der Kavität und dem Schieber in dessen Endstellung gebildeten Zwischenraum ausfüllt,
- nach Erkalten des in der Kavität befindlichen Kunststoffs Zurückfahren des Schiebers in seine Ausgangs-Stellung und Auseinanderfahren der Werkzeug-Hälften, so dass das Bauteil dem Pressverform-Werkzeug entnehmbar ist.

Ein wesentliches Problem von gattungsgemäßen Verbundbauteilen besteht in einer zu geringen Festigkeit der Verbindung zwischen der Strukturkomponente und der hinterspritzten Spritzgusskomponente. Zur Verbesserung der Anhaftung der Spritzgusskomponente sind im Stand der Technik unterschiedliche Ansätze bekannt. Beispielsweise wird beim Hinterspritzen versucht, den schmelzflüssigen Spritzgusskunststoff mit hoher Temperatur bis in den Verbundwerkstoff der Strukturkomponenten eindringen zu lassen, um eine gute Anbindung durch Aufschmelzen oder Verklammerung mit den darin angeordneten Fasern zu erreichen. Dabei besteht jedoch die Gefahr, die typischerweise sehr dünne Strukturkomponente zu durchspritzen und/oder eine lokale Verdrängung der Fasern zu bewirken, so dass unerwünschte mechanische Schwachstellen in der Strukturkomponente erzeugt werden.

Weiterhin können identische Grundpolymere im Matrixwerkstoff der Strukturkomponente und im Kunststoff der Spritzgusskomponente verwendet werden, um eine stoffschlüssige Verbindung zwischen den Komponenten zu erzeugen. Dies führt jedoch zwangsläufig zu einer Beschränkung in der Werkstoffauswahl und somit im möglichen Funktionsumfang des gebildeten Verbundbauteils.

Zudem ist es bekannt, die effektive Kontaktfläche zwischen den Komponenten durch Aufrauhung oder sonstige geeignete Oberflächenstrukturierung der Strukturkomponente zu vergrößern oder mittels Durchbrüchen und Hinterschnitten in der Strukturkomponente die Ausbildung einer formschlüssigen Verbindung mit der hinterspritzten Spritzgusskomponente zu erzeugen. Diese Ansätze bedingen ökonomisch nachteilige zusätzliche Verfahrensschritte bei der Herstellung des Verbundbauteils.

### OFFENBARUNG DER ERFINDUNG

Es ist daher die Aufgabe der vorliegenden Erfindung, eine alternative Ausbildung eines gattungsgemäßen Verbundbauteils sowie ein Verfahren zu seiner Herstellung vorzuschlagen, wobei das Verbundbauteil insbesondere durch eine verbesserte Haftfestigkeit der Spritzgusskomponente an der Strukturkomponente charakterisiert sein soll.

Diese Aufgabe wird ausgehend von einem Verbundbauteil gemäß Anspruch 1 sowie einem Verfahren zur Herstellung gemäß Anspruch 8 gelöst. Vorteilhafte Weiterbildungen der Erfindung sind in den abhängigen Ansprüchen angegeben.

Die technische Lehre der Erfindung offenbart, dass das Verbundbauteil wenigstens eine Verbindungskomponente aus einem textilen Flächengebilde aufweist, wobei die Verbindungskomponente im Hinterspritzabschnitt von der Spritzgusskomponente umschlossen und/oder durchdrungen ist, und wobei die Verbindungskomponente außerhalb des Hinterspritzabschnitts mit der Strukturkomponente verbunden ist.

Die Erfindung geht von dem Gedanken aus, die Anbindungsqualität der Spritzgusskomponente signifikant zu verbessern, indem ein als Verbindungskomponente fungierendes Textilhalbzeug in den Verbund integriert wird, wobei die Verbindungskomponente im Bereich des Hinterspritzabschnitts mit der Spritzgusskomponente eine formschlüssige und/oder stoffschlüssige Verbindung ausbildet und außerhalb des Hinterspritzabschnitts fest mit der Strukturkomponente verbunden ist, insbesondere mit dieser verpresst ist. Herstellungsseitig umfließt und/oder durchdringt der schmelzflüssige Kunststoff der Spritzgusskomponente die Verbindungskomponente unter Bildung einer belastbaren Verbindung. Die im Grenzbereich zwischen Struktur- und Spritzgusskomponente in der Praxisanwendung auftretenden Lasten werden von der erfindungsgemäßen Verbindungskomponente aufgenommen, so dass der Gesamtverbund eine signifikant erhöhte Festigkeit erhält.

Vorzugsweise ist die Verbindungskomponente imprägnierbar ausgebildet. Imprägnierbar bedeutet im vorliegenden Zusammenhang, dass das die Verbindungskomponente konstituierende Textilgebilde mit dem Spritzgusskunststoff in schmelzflüssiger Form durchtränkbar und/oder durchdringbar ausgebildet ist, d.h. eine ausreichende Durchlässigkeit aufweist, so dass beim Hinterspritzen ein Verbund von Textilfasern in einer Kunststoffmatrix erzeugt wird. Die Verbindungskomponente kann dann insbesondere den gesamten Hinterspritzabschnitt überdecken und aufgrund der Imprägnierbarkeit durchdringt der hinterspritzte Kunststoff das Textil unter Bildung einer formschlüssigen Verbindung.

Die Verbindungskomponente ist beispielsweise als ein Gewebe, Gelege, Gewirk, Geflecht, Gestrick oder Vlies ausgebildet. Die konkrete Ausbildung des Textilgebildes kann insbesondere der Werkstoffkombination des Verbundbauteils sowie der für die adressierte Anwendung notwendigen intrinsischen Festigkeit der Verbindungskomponente entsprechend gewählt werden. Dabei weist die Verbindungskomponente beispielsweise thermoplastische Fasern, Kohlefasern, Glasfasern, Aramidfasern oder Cellulosefasern auf.

Die Strukturkomponente weist vorzugsweise ein Organoblech oder einen eigenverstärkten Thermoplastverbund auf. Ein eigenverstärkter Thermoplastverbund ist dadurch gekennzeichnet, dass Kunststofffasern und Kunststoffmatrix in der gleichen chemischen Zusammensetzung vorliegen, wobei die Fasern anisotrope mechanische Eigenschaften aufgrund einer bevorzugten Molekülorientierung aufweisen.

In vorteilhafter Ausführungsform des erfindungsgemäßen Verbundbauteils weisen die Verbindungskomponente, die Strukturkomponente und/oder die Spritzgusskomponente einen chemisch identischen Werkstoff auf. Sind beispielsweise Fasern und Matrixwerkstoffe sämtlicher Komponenten aus einem chemisch identischen thermoplastischen Kunststoff ausgebildet, so kann bei geeigneter Durchführung des Herstellungsprozesses eine stoffschlüssige Verbindung zwischen sämtlichen Komponenten ausgebildet werden.

Beispielsweise weist die Verbindungskomponente eine Dicke von 10 µm bis 2 mm auf, wobei die Dickenmessung typischerweise unter einem Prüfdruck von 2 kPa erfolgt. Die Dicke ist in Abhängigkeit vom Werkstoff und der Makrostruktur des Textils derart auszuwählen, dass einerseits eine ausreichende Imprägnierbarkeit der Verbindungskomponente gegeben ist und andererseits eine ausreichende mechanische Festigkeit vorliegt.

Die Erfindung betrifft des Weiteren ein Verfahren zur Herstellung eines Verbundbauteils gemäß einer der vorgenannten Ausführungsformen, wobei das Verfahren wenigstens die folgenden Schritte in nicht fester Reihenfolge umfasst:
- Bereitstellen einer Kompaktier- und Spritzgießvorrichtung mit einem Werkzeug, welches einen Kompaktierabschnitt und wenigstens einen Hinterspritzabschnitt aufweist,
- Bereitstellen eines konfektionierten Stapels aus einem Faserhalbzeug, einem vorimprägnierten Faser-Matrix-Halbzeug oder einem fertigen Bauteil und der Verbindungskomponente aus einem textilen Flächengebilde,
- Einlegen des Stapels in das Werkzeug,
- Erwärmen des Stapels,
- Kompaktieren des Stapels mittels des Werkzeugs im Kompaktierabschnitt und/oder Erwärmen und Anschmelzen des Bauteils unter Bildung eines Verbundes aus der Strukturkomponente mit der Verbindungskomponente,
- Hinterspritzen des Verbundes im Hinterspritzabschnitt mit einem Kunststoff unter Imprägnierung und/oder Durchspritzung der Verbindungskomponente und Bildung der Spritzgusskomponente,
- Entformen und Erhalt des Verbundbauteils.

Das erfindungsgemäße Verfahren wird nachfolgend im Zusammenhang mit der Beschreibung der Figuren näher erläutert.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1a:: eine schematische Querschnittsansicht eines erfindungsgemäßen Verbundbauteils,
- Fig. 1b:: eine Detailansicht zur Fig. 1a, und
- Fig. 2a - 2c:: schematische Querschnittsansichten zu Darstellung des erfindungsgemäßen Verfahrens.

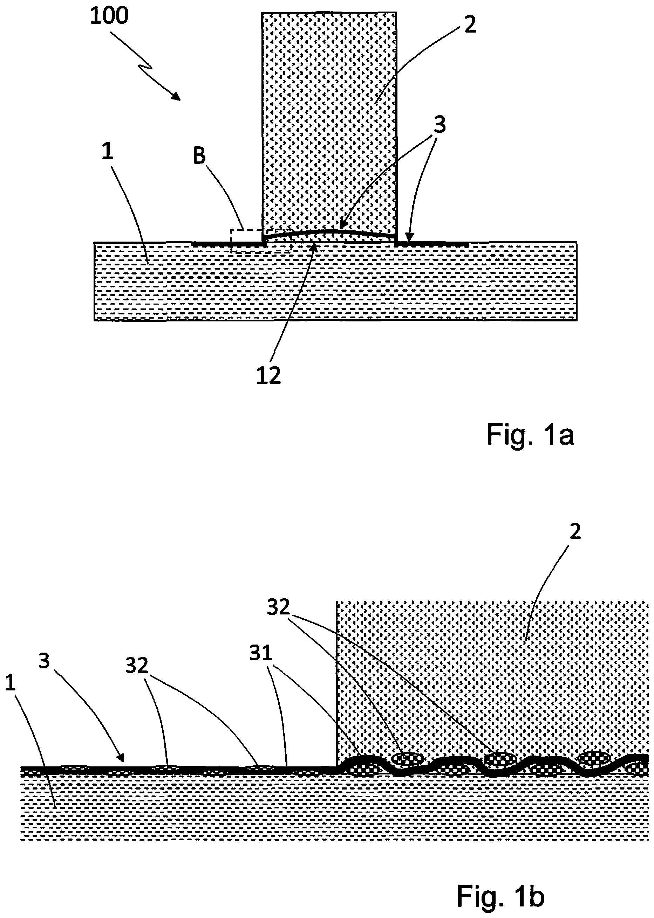

Fig. 1a zeigt eine schematische Querschnittsansicht eines erfindungsgemäßen Verbundbauteils 100 umfassend die Strukturkomponente 1 aus einem Faserverbundwerkstoff, die Spritzgusskomponente 2 aus einem Kunststoff sowie die Verbindungskomponente 3 aus einem textilen Flächengebilde. Die Verbindungskomponente 3 erstreckt sich über den gesamten Hinterspritzabschnitt 12 sowie über daran angrenzende Abschnitte der Strukturkomponente 1. Dabei verläuft die Verbindungskomponente 3 entlang des Hinterspritzabschnitts 12 innerhalb der Spritzgusskomponente 2, von welcher sie umschlossen und durchdrungen ist, und außerhalb des Verbindungsabschnitts 12 ist die Verbindungskomponente 3 mit der Strukturkomponente 1 unter Bildung einer belastbaren Verbindung verpresst. Der stark gekrümmte Verlauf der Verbindungskomponente 3 in Fig. 1a ist zum Zwecke der Anschaulichkeit schematisch übertrieben dargestellt, vorzugsweise ist die Verbindungskomponente 3 in die Oberflächenlage der Strukturkomponente 1 eingepresst und im Hinterspritzabschnitt 12 verläuft die Verbindungskomponente 3 ebenfalls in unmittelbarer Nähe zur Grenzfläche zwischen der Spritzgusskomponente 2 und der Strukturkomponente 1, beispielsweise beträgt die Dicke des unter die Verbindungskomponente 3 durchgetretenen Kunststoffs lediglich einige 10 Mikrometer. Durch die erfindungsgemäße Verstärkung des Verbundbauteils 100 mittels der eingeschlossenen Verbindungskomponente 3 kann die Scherfestigkeit des Verbundbauteils 100 experimentellen Befunden zufolge um bis zu 50 % und mehr gesteigert werden. Mit weiterem Vorteil führt das Vorhandensein der Verbindungskomponente 3 im Fall einer Überlastung des Verbundbauteils 100 dazu, dass ein Bruch im Bereich der Verbindung zwischen Strukturkomponente 1 und Spritzgusskomponente 2 nicht zu einem vollständigen Ablösen der Komponenten 1, 2 voneinander oder zum Ablösen von Splittern führt.

Fig. 1b zeigt eine Detailansicht zur Fig. 1a, entsprechend dem dort strichliert eingezeichneten Bildausschnitt B. Die Verbindungskomponente 3 besteht hier beispielhaft aus Monofilamenten, welche ein Gewebe aus quer zueinander angeordneten Kettfäden 31 und Schussfäden 32 bilden. Beim Hinterspritzen der Spritzgusskomponente 2 dringt der diese konstituierende, schmelzflüssige Kunststoff in das Gewebe der Verbindungskomponente 3 ein und durchdringt dieses unter Aufblähung und Auffüllung von Zwischenräumen zwischen den Kettfäden 31 und den Schussfäden 32, wodurch erfindungsgemäß eine besonders belastbare Verstärkung in der Verbindungszone zwischen der Strukturkomponente 1 und der Spritzgusskomponente 2 entsteht. Im Bereich außerhalb der Spritzgusskomponente 2 liegt das Gewebe der Verbindungskomponente 3 stark kompaktiert in einem Verbund mit der Strukturkomponente 1 vor.

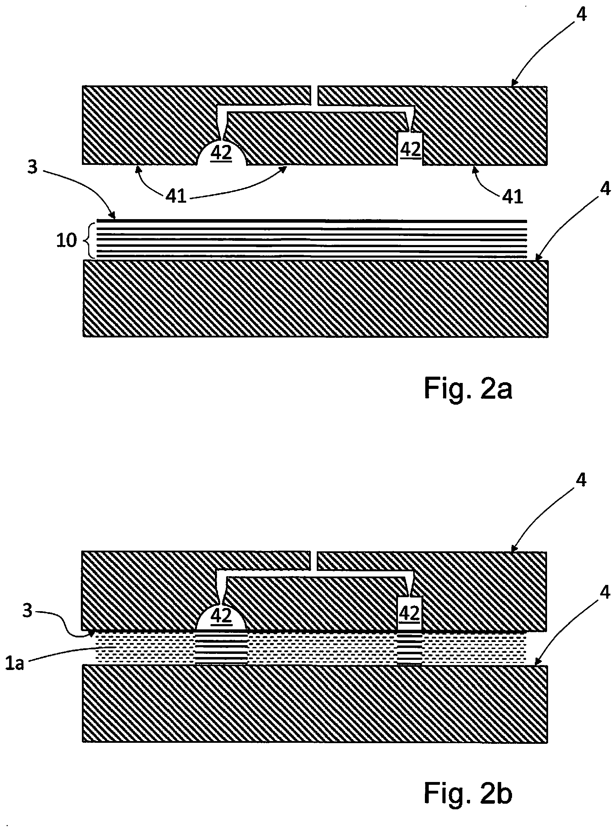

Die Fig. 2a - 2c zeigen schematische Darstellungen von Verfahrensschritten des erfindungsgemäßen Verfahrens zur Herstellung des Verbundbauteils 100. Dargestellt sind Querschnittsansichten des Werkzeugs 4 der bereitgestellten Kompaktier- und Spritzgießvorrichtung, welches im vorliegenden Fall eine Düsenseite mit zwei Kavitäten als Hinterspritzabschnitte 42 aufweist, welche von dem planaren Kompaktierabschnitt 41 umrandet sind. Die Hinterspritzabschnitte 42 sind über ein Angusssystem mit schmelzflüssigem Kunststoff beaufschlagbar.

Die Fig. 2a zeigt einen konfektionierten Stapel aus einem vorimprägnierten Faser-Matrix-Halbzeug 10 und der darauf angeordneten Verbindungskomponente 3 aus einem textilen Flächengebilde, wobei der Stapel in die Auswerferseite des Werkzeugs 4 eingelegt ist. Beispielsweise kann der Stapel bereits unmittelbar vor dem Einlegen in das Werkzeug 4 erwärmt worden sein und eine zur Kompaktierung ausreichende Temperatur aufweisen.

Fig. 2b zeigt das Werkzeug 4 in einer geschlossenen Stellung, in welcher im Bereich des Kompaktierabschnitts 41 ein ausreichender Druck auf den eingelegten Stapel aus Fasermatrixhalbzeug 10 und Verbindungskomponente 3 ausgeübt wird, dass eine Kompaktierung desselben stattfindet unter Bildung der Strukturkomponentenabschnitte 1a und eines Verbundes mit der Verbindungskomponente 3. Die dazu notwendige Prozesswärme ist dem Stapel wahlweise vorab zugefügt worden oder aber es wird mit einem beheizten Werkzeug 4 gearbeitet. Durch diesen Kompaktiervorgang wird das textile Flächengebilde, welches die Verbindungskomponente 3 darstellt, in die Oberfläche der Strukturkomponentenabschnitte 1a eingepresst und insbesondere von der Matrix des Faser-Matrix-Halbzeugs 10 durchdrungen und/oder umschlossen. Im Bereich unter den Spritzgusskavitäten, d.h. der Hinterspritzabschnitte 42, liegt in diesem Verfahrensschritt kein Kompaktierdruck vor.

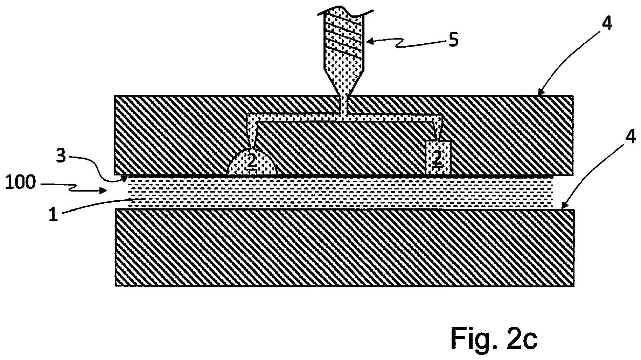

Fig. 2c zeigt das Hinterspritzen in den beiden Hinterspritzabschnitten 42 mit einem Kunststoff, welcher in schmelzflüssiger Form und unter hohem Druck von der Spritzeinheit 5 in das Angusssystem eingefüllt wird, wobei der Kunststoff die Verbindungskomponente 3 imprägniert und/oder durchspritzt. Dabei wird ein ausreichender Druck auf den unterhalb der Hinterspritzabschnitte 42 liegenden Stapel ausübt, dass auch in diesem Bereich eine Kompaktierung des Faser-Matrix-Halbzeugs 10 unter Bildung der Strukturkomponente 1 und Einpressen der Verbindungskomponente 3 stattfindet. Nach dem Erkalten des eingespritzten Kunststoffes bildet dieser die Spritzgusskomponenten 2 und nach dem Entformen wird das erfindungsgemäße Verbundbauteil 100 erhalten.

### Bezugszeichenliste:

- 100: Verbundbauteil
- 1: Strukturkomponente
- 1a: Abschnitt der Strukturkomponente
- 10: Halbzeug
- 12: Hinterspritzabschnitt
- 2: Spritzgusskomponente
- 3: Verbindungskomponente
- 31: Kettfaden
- 32: Schussfaden
- 4: Werkzeug
- 41: Kompaktierabschnitt
- 42: Hinterspritzabschnitt
- 5: Spritzeinheit

- B: Bildausschnitt

## Patentansprüche

1. Verbundbauteil (100) umfassend eine Strukturkomponente (1) aus einem thermoplastischen Werkstoff oder einem Thermoplast-basierten Verbundwerkstoff und wenigstens eine Spritzgusskomponente (2) aus einem Kunststoff, wobei die Strukturkomponente (1) in einem Hinterspritzabschnitt (12) mit der Spritzgusskomponente (2) hinterspritzt ist,
**dadurch gekennzeichnet,**
**dass** das Verbundbauteil (100) wenigstens eine Verbindungskomponente (3) aus einem textilen Flächengebilde aufweist, wobei die Verbindungskomponente (3) im Hinterspritzabschnitt (12) von der Spritzgusskomponente (2) umschlossen und/oder durchdrungen ist und wobei die Verbindungskomponente (3) außerhalb des Hinterspritzabschnitts (12) mit der Strukturkomponente (1) verbunden ist.

2. Verbundbauteil (100) nach Anspruch 1,
**dadurch gekennzeichnet,**
**dass** die Verbindungskomponente (3) imprägnierbar ausgebildet ist.

3. Verbundbauteil (100) nach Anspruch 1 oder 2,
**dadurch gekennzeichnet,**
**dass** die Verbindungskomponente (3) als ein Gewebe, Gelege, Gewirk, Geflecht, Gestrick oder Vlies ausgebildet ist.

4. Verbundbauteil (100) nach einem der vorgenannten Ansprüche,
**dadurch gekennzeichnet,**
**dass** die Verbindungskomponente (3) thermoplastische Fasern, Kohlefasern, Glasfasern, Aramidfasern oder Cellulosefasern aufweist.

5. Verbundbauteil (100) nach einem der vorgenannten Ansprüche,
**dadurch gekennzeichnet,**
**dass** die Strukturkomponente (1) ein Organoblech oder einen eigenverstärkten Thermoplastverbund aufweist.

6. Verbundbauteil (100) nach einem der vorgenannten Ansprüche,
**dadurch gekennzeichnet,**
**dass** die Verbindungskomponente (3), die Strukturkomponente (1) und/oder die Spritzgusskomponente (2) einen chemisch identischen Werkstoff aufweisen.

7. Verbundbauteil (100) nach einem der vorgenannten Ansprüche,
**dadurch gekennzeichnet,**
**dass** die Verbindungskomponente (3) eine Dicke von 10 Mikrometer bis 2 Millimeter bei einem Prüfdruck von 2 kPa Druck aufweist.

8. Verfahren zur Herstellung eines Verbundbauteils (100) gemäß einem der vorgenannten Ansprüche wenigstens umfassend die folgenden Schritte in nicht fester Reihenfolge:
- Bereitstellen einer Kompaktier- und Spritzgießvorrichtung mit einem Werkzeug (4), welches einen Kompaktierabschnitt (41) und wenigstens einen Hinterspritzabschnitt (42) aufweist,
- Bereitstellen eines konfektionierten Stapels aus einem Faserhalbzeug, einem vorimprägnierten Faser-Matrix-Halbzeug (10) oder einem Bauteil und der Verbindungskomponente (3) aus einem textilen Flächengebilde,
- Einlegen des Stapels in das Werkzeug (4),
- Erwärmen des Stapels,
- Kompaktieren des Stapels mittels des Werkzeugs (4) im Kompaktierabschnitt (41) unter Bildung eines Verbundes aus der Strukturkomponente (1a) mit der Verbindungskomponente (3),
- Hinterspritzen des Verbundes im Hinterspritzabschnitt (42) mit einem Kunststoff unter Imprägnierung und/oder Durchspritzung der Verbindungskomponente (3) und Bildung der Spritzgusskomponente (2),
- Entformen und Erhalt des Verbundbauteils (100).

## Claims

1. A composite component (100) comprising a structural component (1) from a thermoplastic material or a thermoplastic-based composite material and at least one injection molding component (2) from a plastic, wherein the structural component (1) is back molded with the injection molding component (2) in a back molding step,
**characterized in that**
the composite component (100) has at least one connecting component (3) of a textile construction, with the connecting component (3) being surrounded and/or penetrated by the injection molding component (2) in the back molding step (12), and with the connecting component (3) being connected to the structural component (1) outside the back molding section (12).

2. A composite component (100) in accordance with claim 1,
**characterized in that**
the connecting component (3) is formed as impregnatable.

3. A composite component (100) in accordance with claim 1 or claim 2,
**characterized in that**
the connecting component (3) is formed as a fabric, non-crimp fabric, knitted fabric, meshwork, knotted fabric, or nonwoven fabric.

4. A composite component (100) in accordance with one of the preceding claims,
**characterized in that**
the connecting component (3) has thermoplastic fibers, carbon fibers, glass fibers, aramid fibers, or cellulose fibers.

5. A composite component (100) in accordance with one of the preceding claims,
**characterized in that**
the structural component (1) comprises an organosheet or an inherently reinforced thermoplastic compound.

6. A composite component (100) in accordance with one of the preceding claims,
**characterized in that**
the connecting component (3), the structural component (1), and/or
the injection molding component (2) comprise a chemically identical material.

7. A composite component (100) in accordance with one of the preceding claims,
**characterized in that**
the connecting component (3) has a thickness of 10 micrometers to 2 millimeters at a test pressure of 2 kPa pressure.

8. A method of producing a composite component (100) in accordance with one of the preceding claims at least comprising the following steps in an unfixed order:
- providing a compacting and injection molding device having a tool (4) that has a compacting section (41) and at least one back molding section (42);
- providing a made-up stack of a semifinished fiber product, a preimpregnated semifinished fiber matrix (10), or a component, and the connecting component (3) of a textile construction;
- placing the stack into the tool (4);
- heating the stack;
- compacting the stack by means of the tool (4) in the compacting step (41) while forming a composite of the structural component (1a) with the connecting component (3);
- back molding the composite in the back molding section (42) using a plastic while impregnating and/or injecting through the connecting component (3) and forming the injection molding component (2); and
- demolding and obtaining the composite component (100).

## Revendications

1. Pièce composite (100) comprenant un composant structural (1) en matière thermoplastique ou en matériau composite à base de thermoplastique et au moins un composant moulé par injection (2) en matière plastique, le composant structural (1) étant contre-moulé par injection avec le composant moulé par injection (2) dans une partie de contre-moulage par injection (12),
**caractérisée en ce que**
la pièce composite (100) présente au moins un composant de liaison (3) en étoffe, le composant de liaison (3) étant enfermé et/ou pénétré par le composant moulé par injection (2) dans la partie de contre-moulage par injection (12) et le composant de liaison (3) étant relié au composant structural (1) en dehors de la partie de contre-moulage par injection (12).

2. Pièce composite (100) selon la revendication 1,
**caractérisée en ce que**
le composant de liaison (3) est réalisé de manière apte à être imprégné.

3. Pièce composite (100) selon la revendication 1 ou 2,
**caractérisée en ce que**
le composant de liaison (3) est réalisé sous la forme de tissu, de nappe, de tricot chaîne, de treillis, de tricot trame ou de nontissé.

4. Pièce composite (100) selon l'une des revendications précédentes,
**caractérisée en ce que**
le composant de liaison (3) présente des fibres thermoplastiques, des fibres de carbone, des fibres de verre, des fibres d'aramide ou des fibres de cellulose.

5. Pièce composite (100) selon l'une des revendications précédentes,
**caractérisée en ce que**
le composant structural (1) présente un organosheet ou un composite thermoplastique auto-renforcé.

6. Pièce composite (100) selon l'une des revendications précédentes,
**caractérisée en ce que**
le composant de liaison (3), le composant structural (1) et/ou le composant moulé par injection (2) présentent un matériau chimiquement identique.

7. Pièce composite (100) selon l'une des revendications précédentes,
**caractérisée en ce que**
le composant de liaison (3) présente une épaisseur allant de 10 micromètres à 2 millimètres à une pression d'épreuve de 2 kPa.

8. Procédé de fabrication d'une pièce composite (100) selon l'une des revendications précédentes comprenant au moins les étapes suivantes dans un ordre aléatoire :
- mise à disposition d'un dispositif de compactage et de moulage par injection doté d'un outil (4), lequel présente une partie compactage (41) et au moins une partie contre-moulage par injection (42),
- mise à disposition d'un empilement préparé constitué d'un produit semi-fini à base de fibres, d'un produit semi-fini fibres/matrice (10) pré-imprégné ou d'un élément et du composant de liaison (3) en étoffe,
- placement de l'empilement dans l'outil (4),
- chauffage de l'empilement,
- compactage de l'empilement au moyen de l'outil (4) dans la partie compactage (41) entraînant la formation d'un composite à partir du composant structural (1a) avec le composant de liaison (3),
- contre-moulage par injection du composite dans la partie contre-moulage par injection (42) avec une matière plastique, entraînant l'imprégnation et/ou le moulage par injection sans carotte du composant de liaison (3) et la formation du composant moulé par injection (2),
- démoulage et obtention de la pièce composite (100).
